# FASCICULE DE BREVET EUROPEEN

(11) **EP 3 726 097 B1**
(45) Date de publication et mention de la délivrance du brevet: **14.09.2022**
(21) Numéro de dépôt: 20170394.9
(22) Date de dépôt: 20.04.2020
(51) Int. Cl.: F16H 57/00, F16H 57/04, F16H 57/02

(54) **REDUCTEUR MECANIQUE DE TURBOMACHINE D'AERONEF**
MECHANISCHES REDUKTIONSGETRIEBE FÜR LUFTFAHRZEUG-TURBOTRIEBWERK
MECHANICAL GEAR FOR AIRCRAFT TURBINE ENGINE

(30) Priorité: 19.04.2019 FR 1904227
(43) Date de publication de la demande: 21.10.2020
(73) Titulaire: Safran Transmission Systems, 92700 Colombes (FR)
(72) Inventeur: DI GIOVANNI, Jean-Charles, Michel, Pierre, 77550 MOISSY-CRAMAYEL (FR); PAP, Bálint, 77550 MOISSY-CRAMAYEL (FR)
(74) Mandataire: Gevers & Orès

(56) Documents cités:
- EP-A1- 3 093 514
- EP-A1- 3 396 187
- WO-A1-2016/079415
- DE-U- 1 985 822
- FR-A1- 2 995 055
- US-A1- 2005 049 101

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 041 054, EP-A1-3396187, DE-U-1985822 et WO-A1-2016/079415.

Le rôle d'un réducteur mécanique est de modifier le rapport de vitesse et de couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur le même diamètre de fonctionnement autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron. Un réducteur doit être lubrifié et l'apport d'huile de lubrification aux composants tournants d'un réducteur peut être problématique. L'huile est en général amenée au réducteur par un distributeur d'huile de lubrification.

Les satellites sont guidés en rotation par des paliers qui sont lubrifiés. Les paliers peuvent être composés d'éléments roulants (roulements à billes, à rouleaux, à rouleaux coniques, etc.) ou peuvent être des paliers hydrodynamiques. Dans ce dernier cas, chaque satellite est monté rotatif sur et autour d'un support tubulaire du porte-satellites, qui est alimenté en huile et qui est configuré pour former un film d'huile entre la périphérie externe du support et la périphérie interne du satellite. Pour cela, dans la technique actuelle, chaque satellite comprend une surface cylindrique interne qui s'étend autour d'une surface cylindrique externe du support et qui délimite avec cette dernière un espace annulaire de formation du film d'huile. Cet espace est alimenté en huile par des canalisations d'acheminement d'huile qui sont formés dans le support et s'étendent depuis la surface cylindrique externe jusqu'à une cavité interne du support qui est alimentée en huile par le distributeur précité.

La présente demande concerne un réducteur dont les satellites sont guidés par des paliers hydrodynamiques.

La technique actuelle présente toutefois une problématique. Les composants solides du palier sont des éléments massiques du réducteur dont le nombre est généralement compris entre 3 et 7. En plus d'avoir un impact sur le poids d'un moteur, cette masse orbite autour de l'axe du moteur (planétaire) ce qui engendre de nombreuses conséquences néfastes tels que du balourd, des vibrations à forte amplitude et des efforts radiaux sur le porte-satellites qui engendre du désalignement entre le solaire, les satellites et la couronne. La masse du palier hydrodynamique en orbite vient cisailler l'huile dans le palier ce qui engendre des pertes, notamment des pertes de frottement des paliers du réducteur qui sont générées dans la zone de rupture du film d'huile. L'huile chaude ne peut pas être évacuée par le coté peu chargée du palier et cette huile chaude non évacuée dès la première rotation a tendance à réchauffer l'huile froide sortant des canalisations d'acheminement d'huile, ce qui empêche le palier d'évacuer correctement les calories.

La présente invention propose un perfectionnement simple, efficace et économique pour améliorer la circulation et l'évacuation de l'huile dans une turbomachine tout en diminuant de préférence la masse des paliers.

### Résumé de l'invention

L'invention concerne un réducteur mécanique selon la revendication 1.

L'invention propose ainsi d'associer deux fonctions distinctes à deux secteurs angulaires distincts de chaque support d'un satellite, et donc de chaque palier hydrodynamique. Chaque support comporte un premier secteur qui est conformé pour former le film d'huile et donc une zone active qui a de préférence une étendue circonférentielle prédéterminée autour de l'axe du support et de rotation du satellite. Ce premier secteur comprend les canalisations d'acheminement d'huile. Chaque support comporte un second secteur qui est conformé pour rompre le film d'huile dans une zone inactive. Le satellite a tendance à se désaxer par rapport à son support. De ce désaxage, résulte un jeu inégal entre les deux éléments. En effet, le jeu est minimal du côté de l'axe du porte-satellites et maximal à la périphérie externe du porte-satellites. La rupture du film d'huile est provoquée par une baignoire, c'est-à-dire un évidement formé à la périphérie du support, configurée pour collecter l'huile sortant de la zone active. On comprend ainsi que de l'huile à une température dite froide est acheminée par la canalisation jusqu'à la périphérie du support pour former un film d'huile dans la zone active et sur toute l'étendue du premier secteur. Du fait des cisaillements et des frottements, l'huile est réchauffée lorsqu'elle s'écoule dans cette zone active. L'huile chaude est en partie évacuée sur les côtés du palier. L'huile chaude qui n'est pas évacuée de cette façon re-circule dans le palier et est évacuée via le jeu radial du fait des forces centrifuges, puis parvient dans la baignoire pour être évacuée. Cette huile chaude ne risque donc pas de réchauffer l'huile froide amenée par les canalisations d'acheminement, ce qui permet d'améliorer la lubrification en évitant de réchauffer l'huile froide avec l'huile chaude. Outre le refroidissement permis, cela permet également d'utiliser pour le palier uniquement une huile n'ayant pas travaillée et qui conserve donc au mieux ses caractéristiques de lubrification (pas d'impuretés).

La solution proposée ci-dessous est compatible d'un réducteur épicycloïdal et différentiel dont la couronne est fixe ou mobile dans le repère du moteur. Elle est compatible de tout type de denture (droite, chevron), de tout type de porte-satellites, qu'il soit monobloc ou de type cage-porte / cage.

Le réducteur selon l'invention peut comprendre une ou plusieurs des caractéristiques suivantes, prises isolément les unes des autres, ou en combinaison les unes avec les autres :
- les canalisations d'acheminement sont sensiblement situées dans un même plan passant par l'axe du support ;
- les canalisations d'acheminement débouchent dans une même rainure formée dans ladite première surface périphérique ;
- le premier secteur a une étendue angulaire supérieure ou égale à celle du second secteur ;
- les extensions angulaires des premier et second secteurs sont égales à 360°,
- Selon l'invention,
le premier secteur a une étendue angulaire comprise 180° et 270°, et ledit second secteur a une étendue angulaire comprise entre 90° et 180°.

L'invention peut comprendre une ou plusieurs des caractéristiques suivantes:
- la baignoire a une forme générale allongée en direction circonférentielle et s'étend sur toute l'étendue angulaire dudit second secteur ;
- la baignoire est délimitée axialement par deux parois latérales qui s'étendent en direction circonférentielle et qui forment ladite seconde surface périphérique, et par deux parois d'extrémité circonférentielle dont une est située à proximité desdites canalisations d'acheminement ;
- chacun des supports tubulaires comprend une première rainure annulaire située sur une première extrémité axiale du support, et une seconde rainure annulaire située sur une deuxième extrémité axiale du support, les première et seconde rainures étant orientées dans des directions axiales opposées, et dans lequel des canalisations d'évacuation d'huile assurent une communication fluidique entre la baignoire et ces rainures ; le premier côté est par exemple un côté avant ou amont et le second côté est alors un côté arrière ou aval ;
- les canalisations d'évacuation comprennent des débouchés dans la baignoire, qui sont répartis sur toute l'étendue circonférentielle de cette baignoire ;
- les canalisations d'évacuation comprennent des débouchés dans la baignoire, qui sont situés sur une partie seulement de l'étendue circonférentielle de cette baignoire et qui sont distants desdites canalisations d'acheminement.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue partielle en coupe axiale d'un réducteur mécanique,
[Fig. 3] la figure 3 est vue similaire à celle de la figure 2 et représentant un mode de réalisation d'un réducteur mécanique selon l'invention,
[Fig. 4] la figure 4 est une vue en perspective d'un support tubulaire de satellite du réducteur de la figure 3,
[Fig. 5] la figure 5 est une vue en coupe transversale du support de la figure 4,
[Fig. 6] la figure 6 est vue en coupe transversale du réducteur de la figure 3,
[Fig. 7] la figure 7 est une vue en perspective d'un support tubulaire de satellite d'une variante de réalisation du réducteur selon l'invention, et
[Fig. 8] la figure 8 est une vue en coupe transversale du support de la figure 7.

### Description détaillée de l'invention

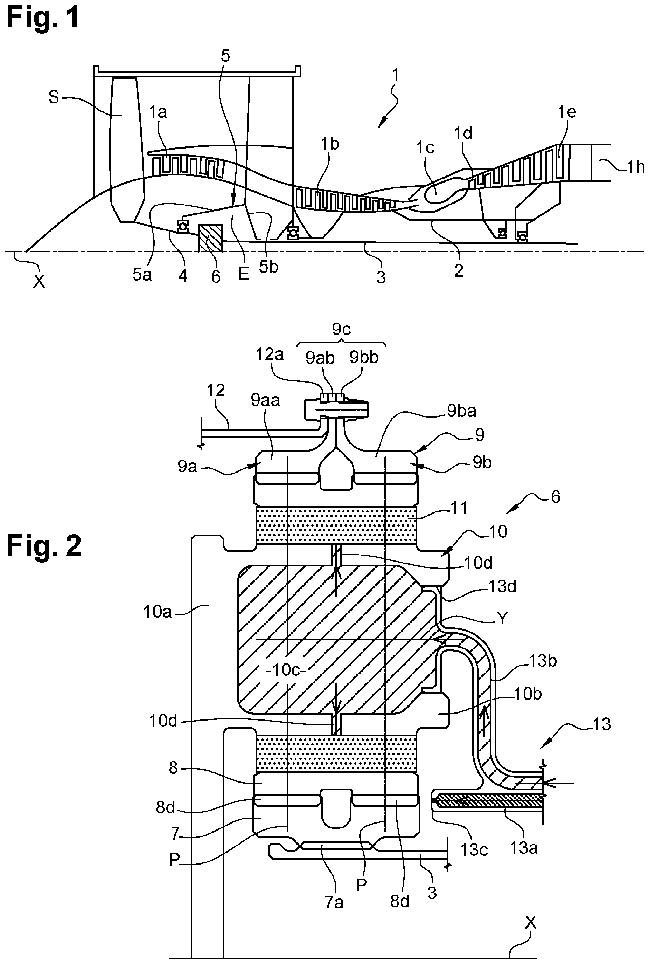

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Dans la présente demande, les expressions amont et aval font référence à l'écoulement général des gaz dans la turbomachine, le long de son axe d'allongement ou de rotation de ses rotors. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est prévu sur un des supports tubulaires 10b du porte-satellites 10 et tous les supports sont positionnés les uns par rapport aux autres à l'aide d'un ou plusieurs châssis structurels 10a du porte-satellites 10. Il existe un nombre de supports tubulaires 10b et de paliers 11 égal au nombre de satellites. Pour des raisons de fonctionnement, de montage, de fabrication, de contrôle, de réparation ou de rechange, les supports 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
▪ Une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ Une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier 11. L'huile circule ensuite à travers le support 10b dans une ou des cavités 10c pour ensuite ressortir par des canalisations 10d afin de lubrifier les paliers des satellites.

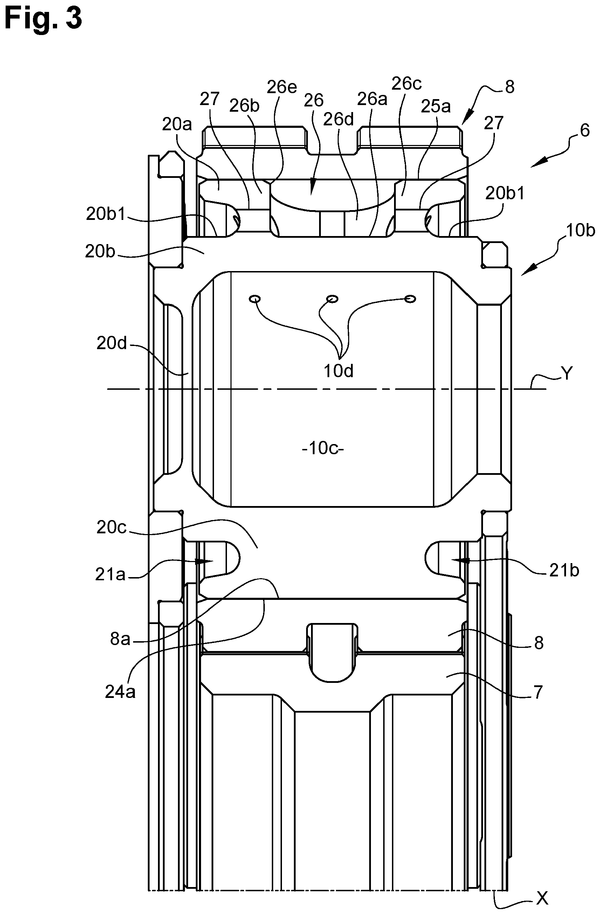

Les figures 3 à 6 représentent un premier mode de réalisation d'un réducteur mécanique 6 selon l'invention.

La description qui précède s'applique à ce réducteur 6 dans la mesure où elle ne contredit pas ce qui suit.

Le support tubulaire 10b de chaque satellite 8 comprend un corps monobloc dans l'exemple représenté qui comporte deux parois annulaires 20a, 20b coaxiales qui s'étendent l'une autour de l'autre et qui sont reliées entre elles par une âme annulaire 20c.

La paroi annulaire interne 20b est fermée par une cloison 20d et a une extrémité axiale ouverte du côté opposé pour recevoir de l'huile apportée par le distributeur d'huile (non représenté). La paroi interne 20b définit ainsi la cavité 10c de réception de l'huile de lubrification.

La paroi annulaire externe 20a a une longueur ou dimension axiale mesurée le long de l'axe Y, qui est proportionnelle de celle de la paroi 20b. La longueur de la paroi 20b est ici égale à la longueur de la paroi 20a additionnée d'un double jeu axial situé à chaque extrémité du support 10b. L'âme 20c a une longueur plus petite que celles des parois 20a, 20b, cette longueur étant mesurée de la même façon. Les extrémités axiales des parois 20a, 20b délimitent entre elles des rainures annulaires 21a, 21b. Cette configuration permet de conférer une certaine souplesse au support 10b, au niveau de chacune de ses extrémités axiales.

Le support 10b comprend ainsi une première rainure annulaire 21a située d'un côté et dont l'ouverture débouche en direction axiale, et une seconde rainure annulaire 21b située du côté opposé et dont l'ouverture débouche axialement du côté opposé à la rainure 21a. Ces rainures 21a, 21b ont en section une forme générale en U.

Le support 10b comprend des canalisations 10d d'acheminement d'huile de lubrification depuis la cavité 10c jusqu'à la périphérie externe du support 10b. Dans l'exemple représenté, ces canalisations 10d sont au nombre de trois même si ce nombre n'est pas limitatif. Elles ont chacune une forme générale allongée et cylindrique. Elles sont alignées et régulièrement espacées dans un plan M passant par l'axe Y du support 10b.

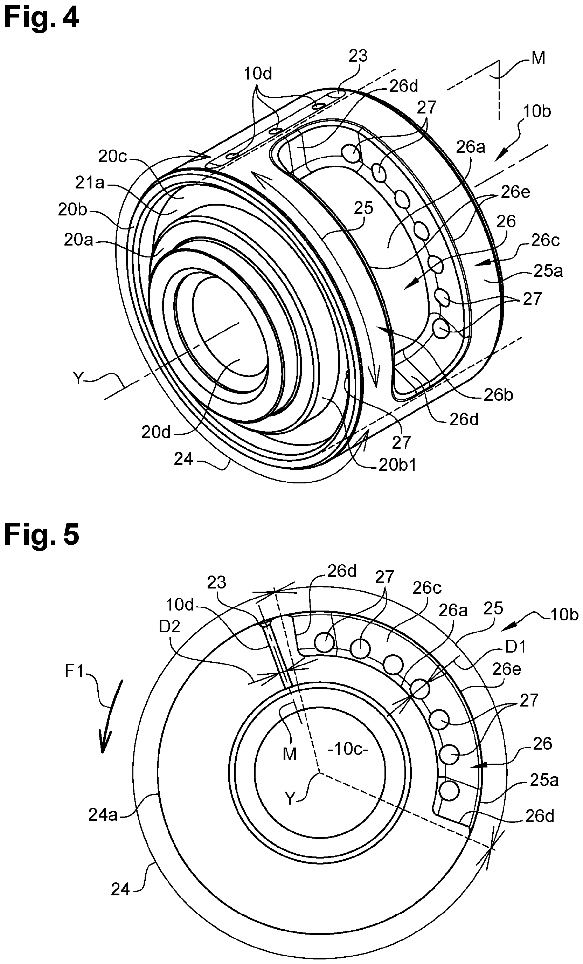

Les figures 4 et 5 permettent de constater que les extrémités radialement externes des canalisations 10d débouchent dans une même rainure 23 formée à la périphérie externe du support 10b. Cette rainure 23 a une forme générale allongée et s'étend sensiblement dans le plan M.

Comme cela est représenté à la figure 5, le support 10b peut être considéré comme comportant ou étant constitué de deux secteurs angulaires 24, 25 s'étendant autour de l'axe Y, à savoir un premier secteur 24 de formation d'un film d'huile et un second secteur 25 de rupture du film d'huile.

De préférence, le premier secteur 24 a une étendue angulaire supérieure ou égale à celle du second secteur 25. Le premier secteur peut avoir une étendue angulaire comprise 180° et 270°, et le second secteur peut avoir une étendue angulaire comprise entre 90° et 180°.

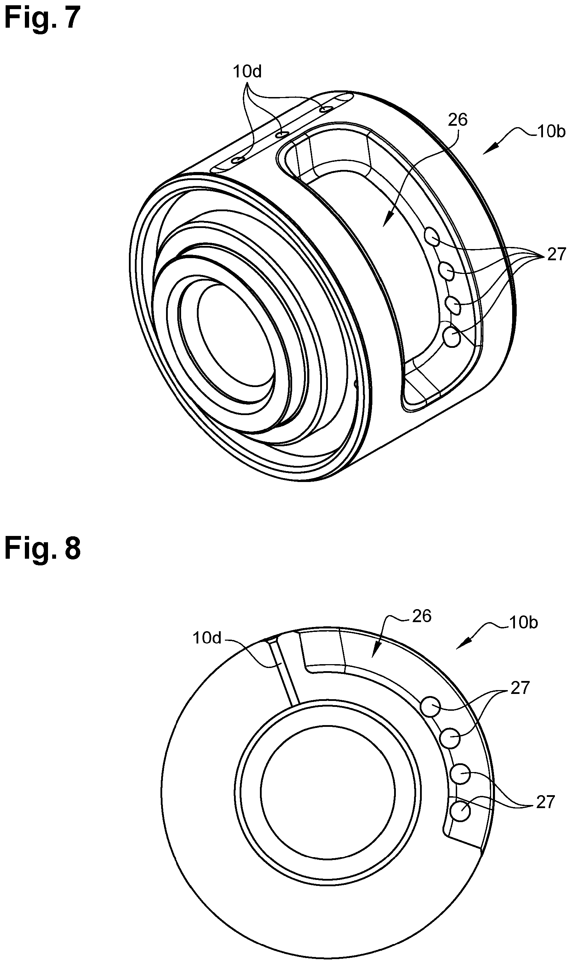

Le premier secteur 24 comprend une surface périphérique externe 24a qui est ici cylindrique et configurée pour délimiter avec une surface cylindrique interne 8a du palier 8 un espace circonférentiel de réception d'huile et de formation d'un film d'huile (figure 8).

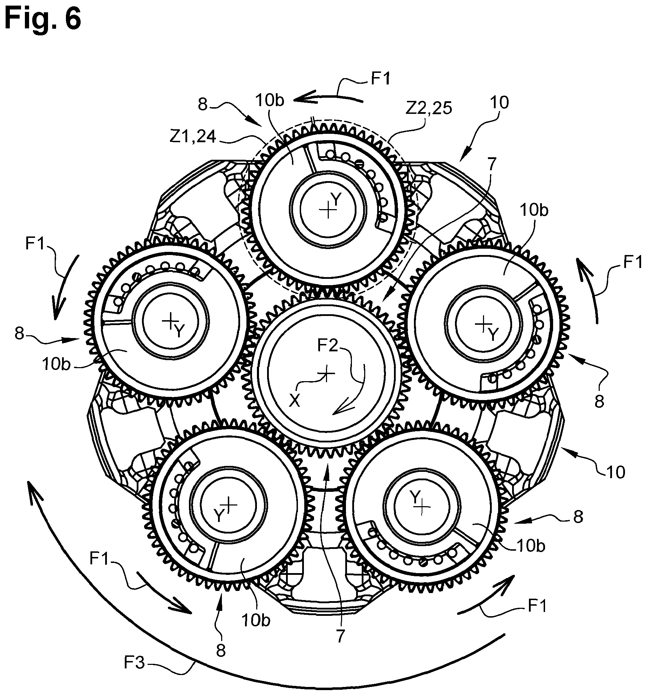

Les canalisations 10d et la rainure 23 sont ici situées à une extrémité circonférentielle du secteur 24. L'huile acheminée par les canalisations 10d est ainsi destinée à s'écouler circonférentiellement sur toute l'étendue du premier secteur 24. Le sens de rotation du satellite 8 sur le support 10b, indiqué par les flèches F1 aux figures 5 et 6, devra donc être choisi pour assurer la formation du film d'huile. Dans la figure 6, la flèche F2 représente le sens de rotation du solaire 7 et la flèche F3 représente le sens de rotation du porte-satellites 10.

Le second secteur 25 comprend une surface périphérique externe 25a qui est ici cylindrique et qui comprend une baignoire 26 de rupture du film d'huile formé sur le secteur 24.

La baignoire 26 a une forme générale allongée en direction circonférentielle et s'étend avantageusement sur toute l'étendue circonférentielle du secteur 25. Elle est ouverte radialement vers l'extérieur et est définie radialement vers l'intérieur par une surface de fond 26a qui est incurvée autour de l'axe Y, et qui peut être alignée avec la surface cylindrique externe 20b1 de la paroi interne 20b (cf. figures 3 et 4).

La baignoire 26 est délimitée axialement par deux parois latérales 26b, 26c qui s'étendent en direction circonférentielle autour de l'axe Y et qui forment la seconde surface périphérique 25a. La baignoire 26 est en outre délimitée par deux parois d'extrémité circonférentielle 26d dont une est située à proximité des canalisations d'acheminement 10d.

Les figures 3 et 4 permettent de constater que la baignoire 26 est centrée sur le support 10b, le long de l'axe Y, c'est-à-dire que les parois 26b, 26c ont globalement la même épaisseur ou dimension axiale mesurée le long de cet axe Y.

Le bord périphérique 26e radialement externe de la baignoire 26 peut être chanfreiné pour faciliter l'écoulement de l'huile depuis la surface 25a dans la baignoire 26 (figures 3 et 4).

Des canalisations 27 d'évacuation d'huile sont formées dans le support 10b et s'étendent entre la baignoire 26 et les rainures 21a, 21b. Ces canalisations 27 s'étendent ici parallèlement à l'axe Y et comprennent une première série qui débouchent dans le fond de la rainure 21a et sur une des surfaces latérales de la baignoire 26. Cette première série de canalisations est ainsi formée dans la paroi 26b. Une autre série de canalisations 27 traverse la paroi 26c et débouche dans le fond de la rainure 21b et sur l'autre surface latérale de la baignoire 26. L'orientation des canalisations 27 n'est pas limitative.

Les canalisations 27 sont situées au voisinage de la surface de fond 26a de la baignoire 26 et sont ici réparties sur toute l'étendue circonférentielle de la baignoire.

Les canalisations 27 de chaque série sont ici au nombre de 7 bien que ce nombre ne soit pas limitatif (il est par exemple compris entre 3 et 20). Dans l'exemple représenté, les canalisations 27 ont un diamètre D1 qui est supérieur au diamètre D2 des canalisations 10d et qui représente par exemple le double du diamètre D2 (figure 5). Ce diamètre D1 peut être proche de la hauteur ou dimension radiale des rainures 21a, 21b, comme cela est visible à la figure 3. Indépendamment du diamètre D2 des canalisations 10d, le diamètre D1 des canalisations 27 peut être le plus grand possible en fonction de la dimension radiale des rainures 21a, 21b.

Le film d'huile qui se forme sur la surface 24a du premier secteur 24 est destiné à être rompu au niveau de la baignoire 26 qui va collecter l'huile de ce film et l'évacuer par les canalisations 27. Cette huile, réchauffée par les cisaillements et les frottements, ne risquera donc pas de réchauffer à son tour l'huile qui sera acheminée par les canalisations 10d. Le risque de mélange entre l'huile chaude et l'huile froide est donc réduit voir empêché, ce qui améliore de manière significative la lubrification du réducteur et donc le rendement du réducteur.

La figure 6 permet de constater que les baignoires 26 sont positionnées dans des régions peu sollicitées mécaniquement afin d'éviter l'endommagement par contrainte mécanique des paliers en fonctionnement. En fonctionnement, un excentrement se créé entre les supports 10b et les satellites 8. Cet excentrement est créé par la force centrifuge et par les efforts d'engrènement exercés sur les satellites 8. Le support 10b excentré crée une variation du jeu radial entre le support et le satellite. Le jeu minimal se présente dans la zone proche de l'axe X du porte-satellites 10, tandis que le jeu maximal se trouve dans la zone située à proximité des canalisations 10d d'acheminement d'huile, qui sont situées au niveau de la périphérie externe du porte-satellites 10. Les supports 10b s'étendent autour de leurs axes Y. Ainsi, en prenant en compte le sens de rotation du satellite 8 (flèche F1), une zone convergente (autrement appelée la zone active Z1) correspondant au secteur 24 est créé en commençant par les canalisations 10d d'acheminement d'huile et en terminant par le coin d'huile (jeu radial minimal), et une zone divergente correspondant au secteur 25 est créée entre le coin d'huile (jeu radial minimal) et les canalisations 10d. Cette deuxième zone est appelée la zone inactive Z2 ou de rupture de film dans laquelle a lieu une cavitation de l'huile.

L'huile est comprimée dans la zone convergente (zone active Z1 correspondant au secteur 24), et la pression engendrée balance les charges sous centrifuge et engrènement sur le satellite. Dans la zone inactive Z2 correspondant au secteur 25, la cavitation d'huile fait que la pression absolue d'huile est quasi nulle (précisément égale à la pression de cavitation).

Les figures 7 et 8 représentent une variante de réalisation du support 10b pour un réducteur mécanique selon l'invention. Cette variante comprend toutes les caractéristiques du précédent mode de réalisation et en diffère par le nombre et la position des canalisations 27 d'évacuation d'huile.

Le nombre de canalisations de chaque série est de 4 de chaque côté du support 10b. Ces canalisations 27 sont régulièrement espacées les unes des autres mais sont ici situées sur une moitié circonférentielle de la baignoire 26, à savoir celle située du côté opposé aux canalisations 10d. Les canalisations 27 sont ainsi distantes des canalisations 10d. Cela permet de créer une zone tampon d'accumulation d'huile dans la moitié circonférentielle de la baignoire 26 située du côté des canalisations 10d. Cette zone tampon permet d'avoir une zone tampon de l'huile cavitée dans la baignoire 26, afin de réaliser une recompression des bulles d'huile et de refroidir l'huile usée. Les gains apportés par cette invention sont notamment :
- des paliers hydrodynamiques et un réducteur plus léger (10 à 25% de masse en moins dans chaque palier) ;
- 20% de pertes en moins (cisaillement de l'huile dans le palier) ;
- moins de désalignement des dentures
- efforts radiaux réduits de 20% dans le porte-satellites, moins de contraintes et donc possibilité de l'alléger ;
- meilleure évacuation des calories ; et
- possibilité de créer un piège à particules et une zone tampon pour les bulles d'huiles qui cavitent entre le satellite et le palier.

La diminution de masse des paliers a un impact positif sur le fonctionnement du réducteur. Elle réduit les déplacements des paliers ce qui diminue le désalignement. En réduisant le désalignement, on augmente le rendement et la fiabilité du réducteur. Enfin, elle réduit aussi les contraintes dans le porte-satellites qui peut être allégé à son tour.

## Revendications

1. Réducteur mécanique (6) pour une turbomachine (1), en particulier d'aéronef, ce réducteur comportant :
- un solaire (7) ayant un axe de rotation (X),
- une couronne (9) qui s'étend autour du solaire (7),
- des satellites (8) qui sont engrenés avec le solaire (7) et la couronne (9) et qui sont maintenus par un porte-satellites (10) qui est configuré pour être mobile en rotation autour dudit axe (X), chacun des satellites (8) étant guidé en rotation par un palier hydrodynamique formé par un support tubulaire (10b) autour duquel le satellite (8) est monté rotatif, et
- un distributeur (13) d'huile de lubrification qui est configuré pour alimenter en huile des cavités internes (10c) desdits supports tubulaires, chacun des supports tubulaires (10b) comportant des canalisations (10d) d'acheminement d'huile depuis sa cavité interne (10c) jusqu'à sa périphérie externe en vue de la formation d'un film d'huile entre le support (10b) et le satellite (8),
chacun des supports tubulaires (10b) comportant :
- un premier secteur angulaire (24) autour d'un axe (Y) du support (10b), qui comporte lesdites canalisations d'acheminement (10d) et une première surface périphérique externe (24a) de formation dudit film d'huile, et
- un second secteur angulaire (25) autour de l'axe (Y) du support (10b), qui comporte une seconde surface périphérique externe (25a) dans laquelle est formée une baignoire (26) de rupture du film d'huile et de récupération de l'huile,
- ledit premier secteur (24) et ledit second secteur (25) sont distincts, **caractérisé en ce que** le premier secteur (24) a une étendue angulaire comprise entre 180° et 270°, et ledit second secteur (25) a une étendue angulaire comprise entre 90° et 180°.

2. Réducteur mécanique (6) selon la revendication 1, dans lequel les canalisations d'acheminement (10d) sont situées dans un même plan (M) passant par l'axe (Y) du support (10b).

3. Réducteur mécanique (6) selon l'une des revendications précédentes, dans lequel les canalisations d'acheminement (10d) débouchent dans une même rainure (23) formée dans ladite première surface périphérique (24a).

4. Réducteur mécanique (6) selon l'une des revendications précédentes, dans lequel le premier secteur (24) a une étendue angulaire supérieure ou égale à celle du second secteur (25).

5. Réducteur mécanique (6) selon l'une des revendications précédentes, dans lequel les extensions angulaires des premier (24) et second (25) secteurs sont égales à 360°.

6. Réducteur mécanique (6) selon l'une des revendications précédentes, dans lequel la baignoire (26) a une forme générale allongée en direction circonférentielle et s'étend sur toute l'étendue angulaire dudit second secteur (25).

7. Réducteur mécanique (6) selon l'une des revendications précédentes, dans lequel la baignoire (26) est délimitée axialement par deux parois latérales (26b, 26c) qui s'étendent en direction circonférentielle et qui forment ladite seconde surface périphérique (25a), et par deux parois d'extrémité circonférentielle (26d) dont une est située à proximité desdites canalisations d'acheminement (10d).

8. Réducteur mécanique (6) selon l'une des revendications précédentes, dans lequel chacun des supports tubulaires (10b) comprend une première rainure (21a) annulaire située sur une première extrémité axiale du support, et une seconde rainure (21b) annulaire située sur une deuxième extrémité axiale du support, les première et seconde rainures (21a, 21b) étant orientées dans des directions axiales opposées, et dans lequel des canalisations (27) d'évacuation d'huile assurent une communication fluidique entre la baignoire (26) et ces rainures (21a, 21b).

9. Réducteur mécanique (6) selon la revendication 8, dans lequel les canalisations d'évacuation (27) comprennent des débouchés dans la baignoire (26), qui sont répartis sur toute l'étendue circonférentielle de cette baignoire (26).

10. Réducteur mécanique (6) selon la revendication 8, dans lequel les canalisations d'évacuation (27) comprennent des débouchés dans la baignoire (26), qui sont situés sur une partie seulement de l'étendue circonférentielle de cette baignoire et qui sont distants desdites canalisations d'acheminement (10d).

11. Turbomachine (1), en particulier d'aéronef, comportant un réducteur mécanique (6) selon l'une des revendications précédentes.

## Patentansprüche

1. Mechanisches Untersetzungsgetriebe (6) für eine Turbomaschine (1), insbesondere eines Flugzeugs, wobei dieses Untersetzungsgetriebe Folgendes umfasst:
- ein Sonnenrad (7), mit einer Drehachse (X),
- eine Krone (9), die sich um das Sonnenrad (7) erstreckt,
- Planetenräder (8), die mit dem Sonnenrad (7) und der Krone (9) in Eingriff stehen und die von einem Planetenträger (10) gehalten werden, der so konfiguriert ist, dass er um die Achse (X) drehbeweglich ist, wobei jedes der Planetenräder (8) durch ein hydrodynamisches Lager, das von einem rohrförmigen Träger (10b) gebildet wird, um den das Planetenrad (8) drehbar gelagert ist, drehbar geführt wird, und
- einen Schmierölverteiler (13), der so konfiguriert ist, dass er innere Hohlräume (10c) der rohrförmigen Träger mit Öl versorgt, wobei jeder der rohrförmigen Träger (10b) Kanäle (10d) zum Befördern von Öl von seinem inneren Hohlraum (10c) zu seinem äußeren Umfang umfasst, um einen Ölfilm zwischen dem Träger (10b) und dem Planetenrad (8) zu bilden,
wobei jeder der rohrförmigen Träger (10b) Folgendes umfasst:
- einen ersten Winkelsektor (24) um eine Achse (Y) des Trägers (10b), der die Kanäle zum Befördern (10d) und eine erste äußere Umfangsoberfläche (24a) zur Bildung des Ölfilms umfasst, und
- einen zweiten Winkelsektor (25) um die Achse (Y) des Trägers (10b), der eine zweite äußere Umfangsoberfläche (25a) umfasst, in der eine Wanne (26) zum Aufbrechen des Ölfilms und zum Auffangen des Öls ausgebildet ist,
- der erste Sektor (24) und der zweite Sektor (25) verschieden sind, **dadurch gekennzeichnet, dass** der erste Sektor (24) eine Winkelausdehnung zwischen 180° und 270° aufweist und der zweite Sektor (25) eine Winkelausdehnung zwischen 90° und 180° aufweist.

2. Mechanisches Untersetzungsgetriebe (6) nach Anspruch 1, wobei die Kanäle zum Befördern (10d) sich in einer gleichen Ebene (M) befinden, die durch die Achse (Y) des Trägers (10b) verläuft.

3. Mechanisches Untersetzungsgetriebe (6) nach einem der vorstehenden Ansprüche, wobei die Kanäle zum Befördern (10d) in eine gleiche Nut (23) münden, die in der ersten Umfangsoberfläche (24a) ausgebildet ist.

4. Mechanisches Untersetzungsgetriebe (6) nach einem der vorstehenden Ansprüche, wobei der erste Sektor (24) eine Winkelausdehnung aufweist, die größer als oder gleich der Winkelausdehnung des zweiten Sektors (25) ist.

5. Mechanisches Untersetzungsgetriebe (6) nach einem der vorstehenden Ansprüche, wobei die Winkelausdehnungen des ersten (24) und zweiten (25) Sektors gleich 360° betragen.

6. Mechanisches Untersetzungsgetriebe (6) nach einem der vorstehenden Ansprüche, wobei die Wanne (26) eine allgemein längliche Form in Umfangsrichtung aufweist und sich über die gesamte Winkelausdehnung des zweiten Sektors (25) erstreckt.

7. Mechanisches Untersetzungsgetriebe (6) nach einem der vorstehenden Ansprüche, wobei die Wanne (26) axial begrenzt ist durch zwei Seitenwände (26b, 26c), die sich in Umfangsrichtung erstrecken und die zweite Umfangsoberfläche (25a) bilden, und durch zwei Umfangsendwände (26d), von denen eine in der Nähe der Kanäle zum Befördern (10d) angeordnet ist.

8. Mechanisches Untersetzungsgetriebe (6) nach einem der vorstehenden Ansprüche, wobei jeder der rohrförmigen Träger (10b) eine erste ringförmige Nut (21a) umfasst, die auf einem ersten axialen Ende des Trägers angeordnet ist, und eine zweite ringförmige Nut (21b), die auf einem zweiten axialen Ende des Trägers angeordnet ist, wobei die erste und die zweite Nut (21a, 21b) in entgegengesetzten axialen Richtungen ausgerichtet sind, und wobei Ölabführkanäle (27) eine fluidische Verbindung zwischen der Wanne (26) und diesen Nuten (21a, 21b) sicherstellen.

9. Mechanisches Untersetzungsgetriebe (6) nach Anspruch 8, wobei die Abführkanäle (27) Mündungen in die Wanne (26) umfassen, die über die gesamte Umfangsausdehnung dieser Wanne (26) verteilt sind.

10. Mechanisches Untersetzungsgetriebe (6) nach Anspruch 8, wobei die Abführkanäle (27) Mündungen in die Wanne (26) umfassen, die sich nur auf einem Teil der Umfangsausdehnung dieser Wanne befinden und die von den Kanäle zum Befördern (10d) entfernt sind.

11. Turbomaschine (1), insbesondere eines Flugzeugs, die ein mechanisches Untersetzungsgetriebe (6) nach einem der vorstehenden Ansprüche umfasst.

## Claims

1. A mechanical reduction gear (6) for a turbomachine (1), in particular for an aircraft, the reduction gear comprising:
- a sun gear (7) having an axis of rotation (X),
- a ring gear (9) which extends around the sun gear (7),
- planet gears (8) which are meshed with the sun gear (7) and the ring gear (9) and which are held by a planet carrier (10) which is configured to be in rotation around said axis (X), each of the planet gears (8) being guided in rotation by a hydrodynamic bearing formed by a tubular support (10b) around which the planet gear (8) is rotatably mounted, and
- a lubricating oil distributor (13) which is configured to supply oil to internal cavities (10c) of said tubular supports, each of the tubular supports (10b) comprising oil conveying pipes (10d) from its internal cavity (10c) to its outer periphery for the formation of an oil film between the support (10b) and the planet gear (8),
each of the tubular supports (10b) comprising:
- a first angular sector (24) around an axis (Y) of the support (10b), which comprises said conveying pipes (10d) and a first outer peripheral surface (24a) for forming said oil film, and
- a second angular sector (25) around the axis (Y) of the support (10b), which comprises a second outer peripheral surface (25a) in which a breaking tub (26) of the oil film and recovering of the oil is formed,
- said first sector (24) and said second sector (25) are distinct,
**characterized in that** the first sector (24) has an angular range of 180° to 270°, and said second sector (25) has an angular range of 90° to 180°.

2. The mechanical reduction gear (6) according to claim 1, wherein the conveying pipes (10d) are located in the same plane (M) passing through the axis (Y) of the support (10b).

3. The mechanical reduction gear (6) according to any one of the preceding claims, wherein the conveying pipes (10d) open into the same groove (23) formed in said first peripheral surface (24a).

4. The mechanical reduction gear (6) according to any one of the preceding claims, wherein the first sector (24) has an angular range greater than or equal to that of the second sector (25).

5. The mechanical reduction gear (6) according to any one of the preceding claims, wherein the angular extensions of the first (24) and second (25) sectors are equal to 360°.

6. The mechanical reduction gear (6) according to any one of the preceding claims, wherein the tub (26) has a general elongated shape in the circumferential direction and extends over the entire angular range of said second sector (25).

7. The mechanical reduction gear (6) according to any one of the preceding claims, wherein the tub (26) is axially delimited by two side walls (26b, 26c) which extend in the circumferential direction and form said second peripheral surface (25a), and by two circumferential end walls (26d), one of which is located in the vicinity of said conveying pipes (10d).

8. The mechanical reduction gear (6) according to any one of the preceding claims, wherein each of the tubular supports (10b) comprises a first annular groove (21a) located on a first axial end of the support, and a second annular groove (21b) located on a second axial end of the support, the first and second grooves (21a, 21b) being oriented in opposite axial directions, and wherein oil discharge pipes (27) provide fluid communication between the tub (26) and these grooves (21a, 21b).

9. The mechanical reduction gear (6) according to claim 8, wherein the discharge pipes (27) comprise openings in the tub (26), which are distributed over the entire circumferential range of this tub (26).

10. The mechanical reducer (6) according to claim 8, wherein the discharge pipes (27) comprise openings in the tub (26), which are located over only part of the circumferential range of this tub and which are spaced from said conveying pipes (10d).

11. A turbomachine (1), in particular for an aircraft, comprising a mechanical reduction gear (6) according to any one of the preceding claims.
